# EUROPÄISCHE PATENTSCHRIFT

(11) **EP 3 241 717 B1**
(45) Veröffentlichungstag und Bekanntmachung des Hinweises auf die Patenterteilung: **29.07.2020**
(21) Anmeldenummer: 17167973.1
(22) Anmeldetag: 25.04.2017
(51) Int. Cl.: B61K 11/00, B65G 53/06, B65G 53/14

(54) **SANDFÜLLUNGSVORRICHTUNG**
SAND FILLING DEVICE
DISPOSITIF DE REMPLISSAGE DE SABLE

(30) Priorität: 04.05.2016 DE 102016207719
(43) Veröffentlichungstag der Anmeldung: 08.11.2017
(73) Patentinhaber: Bombardier Transportation GmbH, 10785 Berlin (DE)
(72) Erfinder: Konte, Bojan Noah, 1030 Wien (AT); Göls, Markus, 2111 Obergänserndorf (AT); Marinos, Antonios, 2100 Korneuburg (DE); Szakal, Christian, 2490 Ebenfurth (AT)
(74) Vertreter: Patentanwälte Bressel und Partner mbB

(56) Entgegenhaltungen:
- EP-A1- 0 747 305
- EP-A1- 1 182 109
- AT-B- 213 774
- US-A- 4 098 412

## Beschreibung

Die vorliegende Erfindung betrifft eine Sandfüllungsvorrichtung, die zum Ausblasen von Sand oder zur Befüllung von Behältnissen verwendbar ist sowie ein Verfahren zum Ausblasen und/oder zum Befüllen eines Behältnisses mit Sand, wobei eine solche Vorrichtung eingesetzt wird.

Schienenfahrzeuge, insbesondere Straßenbahnen, weisen häufig eine Sandungsanlage auf. Aus einer solchen Anlage ist im Bedarfsfall, beispielsweise bei einer Notbremsung, Sand aus dem Vorratsbehälter auf den Schienenweg zu streuen. Durch das Überfahren des Sandes wird der Reibbeiwert in der Rad-Schiene-Aufstandspaarung erhöht, d.h. die Reibung zwischen Rad und Schiene temporär erhöht, um das Fahrzeug in diesen speziellen Fällen - entweder automatisiert oder manuell getriggert - schneller zum Stillstand zu bringen. Auch beim Anfahren ist manchmal eine Erhöhung des Reibbeiwertes notwendig.

Neben Sandungsanlagen für Schienenfahrzeuge sind aus dem Stand der Technik auch Sandungsanlagen für PKW bekannt. US 3,797,867 zeigt eine solche Einrichtung mit einem Speicherbehälter für Sand und einer hindurchgeführten Rohrleitung mit Einlass- und Auslassöffnungen, wobei die Auslassöffnungen außerhalb der Speichereinrichtung angeordnet sind und die Einlassöffnungen seitlich an der Röhre angeordnet sind. Durch einen Ventilator wird in die Röhre Luft eingeblasen und ein Ansaugeffekt erzeugt, wodurch Sand aus dem Speicherbehälter durch die Öffnungen eingesaugt wird und durch die Röhre zu den Auslassöffnungen transportiert wird. Von dort aus wird der Sand auf Antriebsräder geleitet.

Die EP 0 747 305 A1 offenbart ein weiteres Beispiel einer Vorrichtung zum Zuführen von teilchenförmigen Materialien.

Die AT 213 774 B offenbart eine Fördereinrichtung, insbesondere für landwirtschaftliche Produkte, bei welcher in das Austrittsrohr eines Gebläses ein Fülltrichter für das zu fördernde Gut, wie vornehmlich Heu und Stroh, mündet.

Je nach Kundenwünschen und Gegebenheiten werden verschiedene Sandtypen oder Sandmengen in der Sandungseinrichtung benötigt. Eine Sandungseinrichtung weist üblicherweise einen Sandvorratsbehälter auf, in dem der Sand gelagert ist. Bisher erfolgte die Befüllung des Sandvorratsbehälters mit Sand manuell unter Zuhilfenahme verschiedener Technologien.

Aufgabe der vorliegenden Erfindung ist es, eine Sandfüllungsvorrichtung anzugeben, mit der ein üblicher Sandvorratsbehälter einer Sandungsanlage, insbesondere für Schienenfahrzeuge, leicht, schnell und sauber befüllbar ist.

Gelöst wird die Aufgabe durch eine Sandfüllungsvorrichtung nach Anspruch 1. Vorteilhafte Ausgestaltungen einer solchen Sandfüllungsvorrichtung sind in den Unteransprüchen angegeben. Ferner wird ein Verfahren zum Ausbringen von Sand angegeben.

Angegeben wird eine Sandfüllungsvorrichtung, aufweisend
- einen Vorratsbehälter, der mit Sand oder Streugut befüllbar ist,
- eine Röhre, welche eine Wand des Vorratsbehälters zweifach durchstößt und durch den Vorratsbehälter hindurch geführt ist, sodass ein erster Abschnitt der Röhre außerhalb des Vorratsbehälters angeordnet ist, ein zweiter Abschnitt der Röhre im Inneren des Vorratsbehälters angeordnet ist, und ein dritter Abschnitt der Röhre außerhalb des Vorratsbehälters angeordnet ist,
- eine Druckluftquelle, die an den ersten Abschnitt der Röhre angeschlossen ist
wobei die Röhre auf einer Oberseite des zweiten Abschnitts zumindest eine schlitzförmige Öffnung aufweist, durch welche, infolge Schwerkraft in Verbindung mit Druckbeaufschlagung bei Einleiten von Druckluft aus der Druckluftquelle in den ersten Abschnitt der Röhre, sodass die Druckluft von dem ersten Abschnitt in den zweiten Abschnitt geströmt wird, der Sand aus dem Vorratsbehälter in das Innere der Röhre einrieselbar ist, wobei die Druckluft in dem zweiten Abschnitt mit dem eingerieselten Sand vermischbar ist und ein Sand-Luft-Gemisch bildbar ist, welches durch den dritten Abschnitt transportabel und ausblasbar ist, wobei die Druckluftquelle ein Druckbehältnis oder ein Kompressor ist.

Da die Vorrichtung neben Sand auch andere Arten von Streugut ausbringen kann, ist zuvor und im Folgenden der Begriff "Sand" platzhaltend auch für andere Arten von Streugut wie sie im Betrieb des ÖPNV im Straßenverkehr vorkommen können, z.B. Granulat, feinkörniges Material aus anderen Grundwerkstoffen wie Abfallprodukte aus der Holzindustrie (Holzstaub, Holzspäne, ...), Kunststoffe, Streusalze und Mischungen daraus, etc....In diesem Sinn kann die erfindungsgemäße Vorrichtung auch als Streugutbefüllungsvorrichtung bezeichnet werden. Der Vorratsbehälter kann mit Sand, oder allgemein mit Streugut befüllt werden. Unter dem Begriff "Röhre" werden neben einem runden Querschnitt auch andere Arten von "Formrohren" verstanden, die z.B. ovale, rechteckige oder mehreckige Querschnitte aufweisen können.

Dass die Röhre die Wand des Vorratsbehälters zweifach durchstößt bedeutet, dass die Röhre an einer ersten Stelle der Wand in den Vorratsbehälter eindringt und an einer zweiten Stelle der Wand aus dem Vorratsbehälter wieder austritt. An den jeweiligen Stellen durchstößt die Röhre die Wand. Die Wand kann eine umlaufende Seitenwand sein, beispielsweise wenn der Vorratsbehälter im Wesentlichen rund ausgeformt ist. Die Wand kann verschiedene Wandabschnitte aufweisen, die winklig zueinander sein können, beispielsweise wenn der Vorratsbehälter kastenförmig ausgebildet ist. Im Speziellen durchstößt die Röhre einen ersten Wandabschnitt und einen zweiten Wandabschnitt, welche einander gegenüberliegen.

Der Begriff "Oberseite der Röhre" soll wie folgt verstanden werden: die Oberseite der Röhre ist jene Seite, die der Oberseite des Vorratsbehälters zugewandt ist. Anders ausgedrückt ist die Oberseite der Röhre jedenfalls eine dem Behälterboden abgewandte Seite. Es wird in diesem Bereich weiterhin ein Teilbereich verstanden, der oberhalb der horizontalen Ebene des Rohrquerschnittes liegt. Unter der Oberseite der Röhre wird erfindungsgemäß insbesondere ein Bereich verstanden, der wie folgt definiert ist: die oberhalb der horizontalen Ebene des Rohrquerschnittes liegende obere Hälfte der Rohrquerschnitt-Mantelfläche. Dies bedeutet einen Bereich von - 90° bis + 90° gemessen von der Senkrechten. Anders ausgedrückt: die obere Hälfte der Rohrquerschnitt-Mantelfläche (im zweiten Abschnitt des Rohres) charakterisiert die Oberseite und die maximale Arbeitslage der Sandfüllungsvorrichtung.

Die Röhre ist in einer Ausführungsform in einem unteren Bereich des Vorratsbehälters durch den Vorratsbehälter hindurchgeführt. Auch hier kann auf die Arbeitslage der Sandfüllungsvorrichtung bzw. des Vorratsbehälters Bezug genommen werden.

Auf der Oberseite der Röhre können mehrere Öffnungen vorhanden sein. Insbesondere sind eine oder mehrere schlitzförmige Öffnungen vorgesehen.

In einer Ausführungsform erstreckt sich die schlitzförmige Öffnung in Längsrichtung der Röhre. Mehrere schlitzförmige Öffnungen können aneinander anschließen, mit dazwischen ausgebildeten Unterbrechungen.

In einer bevorzugten Ausführungsform erstreckt sich die schlitzförmige Öffnung über den gesamten zweiten Abschnitt der Röhre oder im Wesentlichen über den zweiten Abschnitt. Auch hier können mehrere schlitzförmige Öffnungen in Längsrichtung der Röhre aneinander anschließen.

Der Begriff "im Wesentlichen über den gesamten zweiten Abschnitt" bedeutet, dass die schlitzförmige Öffnung noch vor der Wand innerhalb des Vorratsbehälters endet.

Die schlitzförmige Öffnung, insbesondere eine oder mehrere schlitzförmige Öffnungen, die sich im Wesentlichen über den gesamten zweiten Abschnitt erstreckt/erstrecken, hat/haben folgende technische Funktionen und Vorteile:
- Zum einen wird die Einleitung von Druckluft in den Vorratsbehälter ermöglicht, die den Sand im Vorratsbehälter durchströmen kann,
- Sand kann aus dem Vorratsbehälter durch Druckluft abtransportiert werden, nachdem er durch die schlitzförmige Öffnung in das Innere der Röhre gelangt ist, was durch Gravitation und/oder die Anwendung der Druckluft geschieht.

Hauptarbeitsprinzip der erfindungsgemäßen Vorrichtung ist die Erzeugung eines gewissen Drucks innerhalb des gefüllten Vorratsbehälters und der Abtransport von Sand durch das Innere der Röhre, welcher durch die schlitzförmige Öffnung vom Vorratsbehälter in die Röhre gelangt. Durch die schlitzförmige Öffnung wird gleichermaßen das Eindringen von Luft in den Vorratsbehälter sowie das Einrieseln von Sand in die Röhre ermöglicht. In anderen Worten: Druckluft dringt durch die schlitzförmige Öffnung aus dem Inneren der Röhre in das Innere des Vorratsbehälters, gegebenenfalls durch eine Sandschicht, während durch die schlitzförmige Öffnung gleichzeitig auch das Einrieseln von Sand in die Röhre erfolgt. Der in das Innere der Röhre eingerieselte Sand wird weiterhin durch die Druckluft abtransportiert bzw. ausgeblasen. Die erfindungsgemäße Vorrichtung wird vorzugsweise so betrieben, dass ein permanenter und im Wesentlichen gleich bleibender Luftdruck in die Röhre eingebracht wird, sodass sich ein Gleichgewicht von einrieselndem und abzutransportierendem Sand und vorzugsweise auch ein gleichbleibender Druck innerhalb der Röhre einstellt. Bevorzugt stellt sich auch ein gleichbleibender Druck innerhalb des Vorratsbehälters ein.

Vorstellbar ist auch eine pulsierende oder anderswertig frequenz-getaktete Druckaufbringung.

Die Länge und Breite der schlitzförmigen Öffnung werden vorzugsweise so gewählt, dass das Innere der Röhre durch einrieselnden Sand nicht verstopft wird. Ziel ist es, den inneren Widerstand, der durch den Druckanstieg und gleichzeitige Kollision von Sandpartikeln während des Transports durch die schlitzförmige Öffnung sowie durch die Röhre entsteht, so weit wie möglich zu reduzieren. Anders ausgedrückt: der sich einstellende Druckanstieg innerhalb des Vorratsbehälters und der Röhre soll nicht wesentlich höher sein als der Druck, mit dem die Luft in das System eingeblasen wird.

In einer Ausführungsform weist die Sandfüllungsvorrichtung eine Druckluftquelle auf, die an den ersten Abschnitt der Röhre der Sandfüllungsvorrichtung angeschlossen ist. Die Druckluftquelle ist ein Druckluftbehältnis oder ein Kompressor, insbesondere eine Druckluftflasche. Die Röhre weist eine Eingangsöffnung auf, die am Beginn des ersten Abschnitts liegt, und eine Ausgangsöffnung, die am Ende des dritten Abschnitts liegt. Erwähnte Sandausbringvorrichtung ist insbesondere an die erste Öffnung, die Eingangsöffnung, des ersten Abschnitts der Röhre angeschlossen. Der Anschluss kann beispielsweise über einen flexiblen Schlauch erfolgen.

Von der Druckluftquelle wird Druckluft in das Innere der Röhre eingebracht. Bei der Druckluftquelle kann der Druck einstellbar, steuerbar oder regelbar sein. Ein bevorzugter Luftdruck, mit dem die erfindungsgemäße Vorrichtung betrieben wird, beträgt 1 - 2 bar, vorzugsweise 1,1 - 2 bar, mehr bevorzugt 1,2 - 2 bar, noch mehr bevorzugt 1,3 - 2 bar, oder 1,4 - 2 bar, oder 1,5 - 2 bar. Andere bevorzugte Druckbereiche sind 1,1 - 4 bar, mehr bevorzugt 1,2 - 4 bar, noch mehr bevorzugt 1,3 - 4 bar, oder 1,4 - 4 bar, oder 1,5-4 bar, oder 2-4 bar.

An den dritten Abschnitt der Röhre der Sandfüllungsvorrichtung kann eine Ausblaseinheit angeschlossen sein, insbesondere an einer erwähnten Öffnung am Ende des dritten Abschnitts. Die Ausblaseinheit kann eine flexible Komponente aufweisen, wie einen Schlauch, und/oder eine starre Komponente, wie ein Rohr. Beispielsweise ist eine weiterführende Verschlauchung/Verrohrung zum Weitertransport des Sandes aus der Sandfüllungsvorrichtung in die Sandungsanlage eines Schienenfahrzeuges etc. angebracht. Durch die Ausblaseinheit kann ein Sand-Luft-Gemisch, das im Inneren der Röhre gebildet wird, ausgeblasen werden.

In einer Ausführungsform der Sandfüllungsvorrichtung ist die Röhre beim Durchgang durch den Vorratsbehälter von Abschnitt 1 in Abschnitt 2 und von Abschnitt 2 in Abschnitt 3 in die Wand eingepasst.

Vorzugsweise sind die Einpassungen als Presspassungen vorhanden. Durch die Presspassung wird eine Abdichtung zwischen der Rohraußenseite und der Wand des Vorratsbehälters bereitgestellt. Bei der Presspassung wird die Wand des Vorratsbehälters verformt und schmiegt sich an die Rohraußenseite an. Hierdurch wird eine Abdichtung zwischen Wand und Rohraußenseite bereitgestellt. Es handelt sich hier um eine sehr einfache und unkomplizierte Art der Abdichtung, wodurch die Bauteile nicht groß dimensioniert werden müssen und damit Gewicht eingespart werden kann. Eine solche Abdichtung ist insbesondere vorteilhaft verwendbar mit einem in die Röhre aufgebrachten Innendruck von 1 - 2 bar, oder einem anderen vorangehend genannten Druck. Bei der Presspassung kann auf jegliche weiteren Dichtungselemente, wie beispielsweise Dichtungsringe, verzichtet werden. Insofern ist die Presspassung eine selbstabdichtende Lösung. Zur Herstellung einer Presspassung kann die Wand des Vorratsbehälters mit Öffnungen versehen werden, insbesondere kreisförmigen Öffnungen, deren Durchmesser kleiner ist als der Außendurchmesser der Röhre. Die Röhre kann unter Kraftaufwendung durch die Öffnungen geführt werden, wodurch die Presspassung hergestellt wird. Die Presspassung wird auch als Übermaßpassung bezeichnet.

In einer anderen Ausführungsform ist in dem ersten Abschnitt der Röhre (außerhalb des Vorratsbehälters) eine erste Dichtungsfläche vorgesehen, gegen welche die Wand pressbar ist, wenn das Innere des Vorratsbehälters mit Druck beaufschlagt wird. Die erste Dichtungsfläche ist vorzugsweise direkt benachbart zur Wand des Vorratsbehälters angeordnet.

Alternativ oder zusätzlich kann an dem dritten Abschnitt der Röhre (außerhalb des Vorratsbehälters) eine zweite Dichtungsfläche vorgesehen sein, gegen welche die Wand pressbar ist, wenn das Innere des Vorratsbehälters mit Druck beaufschlagt wird. Die zweite Dichtungsfläche ist vorzugsweise direkt benachbart zur Wand des Vorratsbehälters angeordnet.
Diese Ausführungsform ist insbesondere vorteilhaft, wenn in das Innere der Röhre ein höherer Luftdruck eingebracht wird, insbesondere 1,5 - 4 bar, oder 2-4 bar, wodurch Sand noch schneller abtransportiert werden kann. Das Innere des Vorratsbehälters wird, wie bereits erläutert, mit Druck beaufschlagt, indem Druckluft aus der Röhre und gegebenenfalls durch Sand in den Vorratsbehälter einströmt. Hierdurch kann der Vorratsbehälter nach außen gedehnt werden, sodass sich die Wand jeweils an die erste bzw. zweite Dichtungsfläche anlegt. Auch hier handelt es sich um einen selbstabdichtenden Effekt. Es ist in diesem Fall nicht nötig, weitere Mittel auf der Innenseite der Vorratsbehälter-Wand vorzusehen (weitere Verschraubungen, etc...), um die Wand gegen die erste/zweite Dichtungsfläche zu pressen. Dies geschieht durch den eingebrachten Luftdruck. Spezielle Ausführungsformen, die diesem Prinzip gehorchen sind wie folgt: In einer Variante kann der Durchmesser der Röhre im ersten Abschnitt und im dritten Abschnitt gegenüber dem zweiten Abschnitt aufgeweitet sein. In diesem Falle ist zu Zwecken der Montage die Röhre vorzugsweise teilbar und entsprechend zusammenfügbar. An der Stelle der Aufweitung wird jeweils eine Dichtungsfläche gebildet, gegen welche die Wand pressbar ist. Zusätzlich kann jeweils ein Dichtungselement vor jene Stelle platziert werden, wo sich der Rohrdurchmesser aufweitet.

In einer weiteren Variante weisen der erste Abschnitt der Röhre und/oder der dritte Abschnitt der Röhre ein Außengewinde auf, vorzugsweise benachbart zu der Wand des Vorratsbehälters. Auf das Außengewinde kann eine Verstärkung aufgeschraubt werden, beispielsweise eine Mutter, an welcher eine Dichtungsfläche gebildet ist. Zusätzlich kann ein Dichtungselement, zum Beispiel ein Dichtungsring, vorgesehen sein.

In vorangehend beschriebener Ausführungsform kann die Wand des Vorratsbehälters durch Verformung des Vorratsbehälters gegen die erste und/oder zweite Dichtungsfläche pressbar sein.

Der Vorratsbehälter kann aus einem verformbaren Material bestehen, insbesondere einem elastisch und/oder plastisch verformbaren Material. Ein bevorzugtes Material für den Vorratsbehälter ist ein Kunststoff.

In einer anderen Variante ist der Vorratsbehälter aus Metall. Die Röhre ist dann vorzugsweise mittels einer stoffschlüssigen Verbindung, insbesondere Schweißen oder Kleben, mit der Wand des Vorratsbehälters verbunden.

In einer Variante wird die Röhre im Bereich des ersten Abschnittes und/oder des dritten Abschnittes mit dem Vorratsbehälter verschweißt. In diesem Falle müssen Vorratsbehälter und Rohr aus geeigneten Werkstoffpaarungen bestehen, welche verschweißbar sein müssen (Metall oder Kunststoff).

In einer Ausführungsform weist die Sandfüllungsvorrichtung einen verfahrbaren oder verschiebbaren Untersatz auf, auf welchen der Vorratsbehälter aufgesetzt ist, oder an welchem der Vorratsbehälter befestigt ist. Durch einen solchen Untersatz wird eine Mobilität der Sandfüllungsvorrichtung ermöglicht, sodass die Vorrichtung an den Ort bewegt werden kann, wo sie gebraucht wird. Der Untersatz kann weiterhin höhenverstellbar sein, was gemeinsam mit der Verfahrbarkeit eine erfindungsgemäße Anwendungs-Verbesserung einer Sandfüllungsvorrichtung darstellt.

In einer Ausführungsform weist die Sandfüllungsvorrichtung eine Befüllöffnung im Vorratsbehälter auf. Durch diese Befüllöffnung kann der Vorratsbehälter mit Sand befüllt werden. An die Befüllöffnung kann eine Zuleitung zur Einleitung von Sand in den Vorratsbehälter angeschlossen sein. Die Zuleitung kann mit einem Ventil oder einer Absperrvorrichtung versehen sein. Durch die Zuleitung kann Sand oder ein Sand-Luft-Gemisch in den Vorratsbehälter eingeleitet werden.

In einem weiteren Aspekt betrifft die Erfindung ein Verfahren zum Ausbringen von Sand und/oder zum Befüllen eines Behältnisses mit Sand, wobei eine Sandfüllungsvorrichtung wie vorangehend beschrieben eingesetzt wird und das Verfahren die Schritte aufweist:
- Einrieseln von Sand aus dem Vorratsbehälter durch die schlitzförmige Öffnung in den zweiten Abschnitt der Röhre infolge Schwerkraft in Verbindung mit Druckbeaufschlagung;
- Einleiten von Druckluft in den ersten Abschnitt der Röhre, sodass die Druckluft von dem ersten Abschnitt in den zweiten Abschnitt geströmt wird, sich dort mit eingerieseltem Sand vermischt und ein Sand-Luft-Gemische gebildet wird, welches durch den dritten Abschnitt transportiert wird,
- Ausblasen des Sand-Luft-Gemisches aus dem dritten Abschnitt und
- optional Einleiten des Sand-Luft-Gemisches in ein zu befüllendes Behältnis.

Beim Einleiten von Druckluft in den ersten Abschnitt der Röhre kann die Luft vom ersten Abschnitt in den zweiten Abschnitt strömen und dort einerseits in den Vorratsbehälter gelangen und sich andererseits mit eingerieseltem Sand vermischen. Beim Vermischen mit dem eingerieselten Sand wird ein Sand-Luft-Gemisch gebildet, welches durch den dritten Abschnitt transportiert wird.

Eine Weiterleitung des Sand-Luft-Gemisches kann in eine zu befüllende Sandungsvorrichtung erfolgen
Die Druckbeaufschlagung kann durch Druckluft erfolgen, die in den Vorratsbehälter eingeleitet wird. Wie oben bereits erwähnt, kann Druckluft, die in die Röhre eingeleitet wird, den Sand im Vorratsbehälter durchströmen und einen Druck im Inneren des Vorratsbehälters aufbauen.

In dem erfindungsgemäßen Verfahren können in beliebiger Kombination die Merkmale eingesetzt werden, die zuvor anhand einer erfindungsgemäßen Sandfüllungsvorrichtung beschrieben wurden. Ebenfalls können in dem Verfahren Merkmale vorhanden sein, die anhand einer erfindungsgemäßen Vorrichtung verfahrensmäßig formuliert sind. Umgekehrt können gegenständliche Merkmale der Vorrichtung durch Funktionalitäten gekennzeichnet sein, die anhand eines erfindungsgemäßen Verfahrens beschrieben sind.

Das gemäß dem Verfahren befüllbare Behältnis ist insbesondere ein Sandbehälter einer Sandungsanlage für ein Schienenfahrzeug. Das Ausbringen von Sand aus der Sandfüllungsvorrichtung kann an einer beliebigen Stelle erfolgen, wo Sandfüllung benötigt wird, insbesondere wenn die Vorrichtung verfahrbar ist

Nachfolgend wird die Erfindung anhand von Ausführungsbeispielen beschrieben. Es zeigen.
- Fig. 1: eine Sandfüllungsvorrichtung in schematischer Ansicht
- Fig. 2: eine alternative Ausführungsform der Sandfüllungsvorrichtung in schematischer Ansicht
- Fig. 3: einen konkreten Aufbau einer Sandfüllungsvorrichtung in einer ersten Ansicht
- Fig. 4: die Sandfüllungsvorrichtung nach Fig. 3 mit weiteren Merkmalen

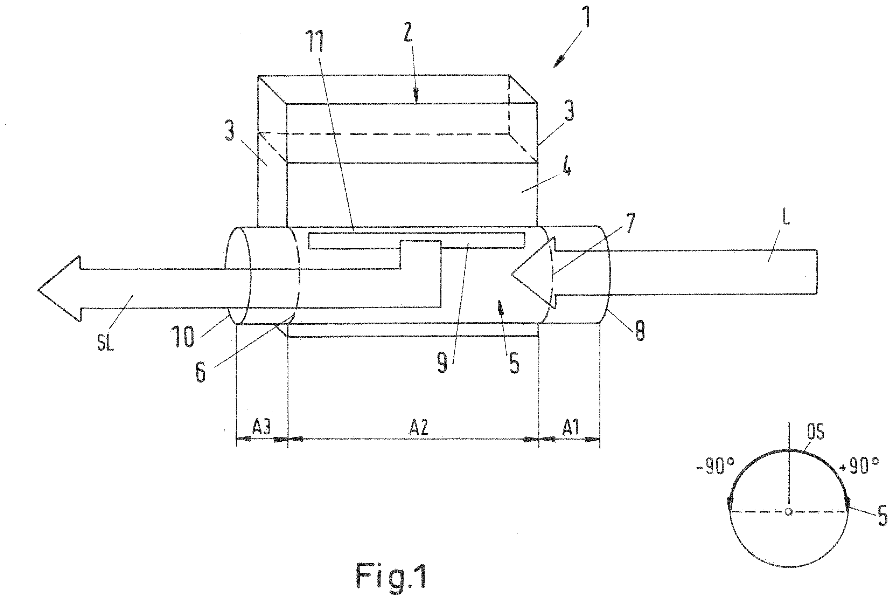

Die Sandfüllungsvorrichtung 1 aus Fig. 1 weist den Vorratsbehälter/"Reservoir" 2 mit der Wand 3 auf. Der Vorratsbehälter 2 ist bis zu einer bestimmten Füllhöhe mit Sand 4 befüllt.

Durch den Vorratsbehälter 2 hindurchgeführt ist die Röhre 5. In der Ansicht der Fig. 1 ist der Vorratsbehälter 2 durchschnitten, während die Röhre 5 in Gänze gezeigt ist. Die Wand 3 setzt sich also nach vorn, in Blickrichtung des Betrachters fort und umschließt die Röhre 5 auch an den beiden eingezeichneten gestrichelten Linien. Die Röhre 5 ist durch eine Presspassung in den Behälter 2 genau in den Öffnungen 6, 7 in die Wand 3 eingepasst.

Die Röhre 5 weist den ersten Abschnitt A1 auf, der außerhalb des Vorratsbehälters 2 angeordnet ist, den zweiten Abschnitt A2, der im Inneren des Vorratsbehälters 2 angeordnet ist und den dritten Abschnitt A3, der wiederum außerhalb des Vorratsbehälters 2 angeordnet ist. Durch die Eingangsöffnung 8 wird Druckluft L, dargestellt durch einen Pfeil, in die Röhre 5 eingeleitet. Durch die schlitzförmige Öffnung 9 rieselt Sand 4 im zweiten Abschnitt A2 in das Innere der Röhre 5. Dort wird der Sand 4 von der Druckluft L aufgenommen und es wird ein Sand-Luft-Gemisch SL gebildet, das ebenfalls mit einem Pfeil dargestellt ist. Das Gemisch SL verlässt die Röhre 5 durch den dritten Abschnitt A3, durch die Ausgangsöffnung 10.

Die schlitzförmige Öffnung 9 befindet sich auf der Oberseite des zweiten Abschnitts A2 der Röhre 5. In der Ansicht der Fig. 1 ist die schlitzförmige Öffnung 9 leicht zum Betrachter hin versetzt, um sie besser darstellen zu können. Vorzugsweise ist die schlitzförmige Öffnung 5 genau auf dem Scheitel 11 der Oberseite angeordnet. Sie kann aber auch, wie hier gezeigt, etwas zur Seite hin versetzt sein. Unter der Oberseite der Röhre wird erfindungsgemäß insbesondere ein Bereich verstanden, der wie folgt definiert ist: die oberhalb der horizontalen Ebene des Rohrquerschnittes liegende obere Hälfte der Rohrquerschnitt-Mantelfläche. Dies bedeutet einen Bereich von - 90° bis + 90° gemessen von der Senkrechten. Dies ist in Fig. 1 rechts unten dargestellt. Die Oberseite ist dort mit OS bezeichnet.

Wie erwähnt, zeigt Fig. 1 eine Presspassung ("press-fit") der Röhre 5 in den Behälter 2. Bei Druckbereichen bis 2 bar sollte die Presspassung ohne weitere Dichtungselemente auskommen und ist somit als "selbstabdichtend" anzusehen.

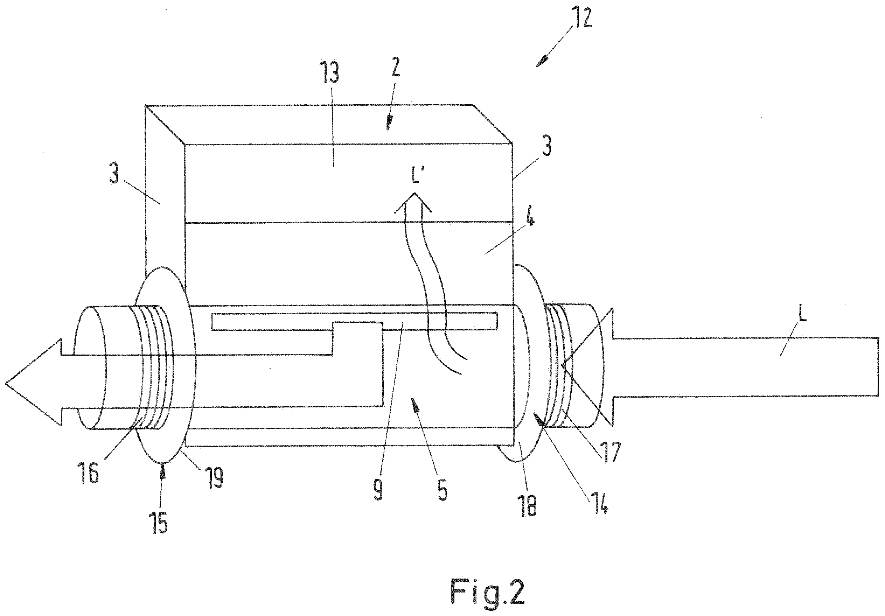

In Fig. 2 ist eine alternative Abdichtung hergestellt, nämlich mit Dichtungselementen 14, 15, die auf die Röhre 5 aufgebracht sind, hier in Form von Dichtungsringen. Identische Merkmale wie in Fig. 1 sind in Fig. 2 mit identischen Bezugszeichen bezeichnet, wobei nicht alle Merkmale erneut mit Bezugszeichen versehen sind.

Der Dichtungsmechanismus in Fig. 2 ist wie folgt: Ein Teil der eingeleiteten Luft L dringt durch die schlitzförmige Öffnung 9 durch den Sand 4 in den Leerraum 13 des Vorratsbehälters ein und in die Zwischenräume in der Sandschüttung 4. Dieser Teil der Luft ist mit L' bezeichnet. Hierdurch steigt im Inneren des Vorratsbehälters 2 der Druck an, und der Vorratsbehälter 2 wird nach außen gedehnt, also auch die Wand 3. Dadurch wird die Wand 3 auf beiden Seiten gegen die Dichtungselemente 14, 15 gepresst und eine Abdichtung erreicht. Die Dichtungselemente 14, 15 werden durch Muttern in ihrer Position gehalten, welche auf Gewinde 16, 17 aufgeschraubt sind. Besagte Muttern sind nicht dargestellt. Das erste Dichtungselement 14 bildet innenseitlich eine erste Dichtungsfläche 18, gegen welche die Wand 3 auf der Außenseite (rechte Seite) gepresst wird. In gleicher Weise bildet das zweite Dichtungselement 15 auf der dem Vorratsbehälter 2 bzw. der Wand 3 zugewandten Seite eine zweite Dichtungsfläche 19, gegen welche die Wand 3 auf der linken Seite gepresst wird. Auch damit wird nur durch Druckbeaufschlagung und ohne weitere Abdichtungsmaßnahmen wie z.B. Kleben, Schweißen, ergänzende Dichtmasse-Werkstoffe, etc... ein "selbstabdichtendes" System erreicht.

Alternativ zu einer Fixierung mit (nicht gezeigten) Muttern könnten der erste Abschnitt A1 und der dritte Abschnitt A3 auch gegenüber dem zweiten Abschnitt A2 aufgeweitet sein und die Dichtungselemente 14, 15 könnten jeweils an einer Flanke der Aufweitung anliegen. In diesem Falle ist zu Montagezwecken das Rohr 5 im nicht-aufgeweiteten Bereich teil- und wieder fügbar ausgeführt.

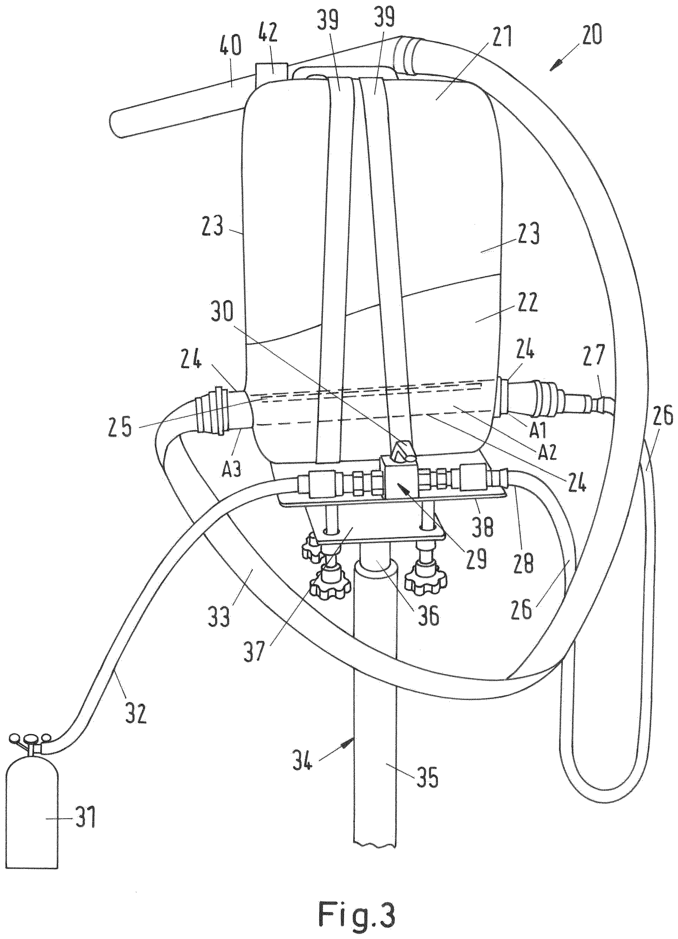

Fig. 3 zeigt einen konkreten Aufbau einer Sandfüllungsvorrichtung 20 mit dem Vorratsbehälter 21, der mit Sand 22 knapp bis zur Hälfte befüllt ist. Der Vorratsbehälter 21 ist aus Kunststoff. Die Wand des Vorratsbehälters 21 ist mit 23 bezeichnet.

Der zweite Abschnitt A2 der Röhre 24 liegt im Inneren des Vorratsbehälters 21 und ist gestrichelt gezeichnet. Wie in der Ausführungsform aus Fig. 1 und Fig. 2 weist der Abschnitt A2 eine schlitzförmige Öffnung 25 auf. Diese erstreckt sich im Wesentlichen über die gesamte Länge des Abschnittes A2, aber nicht ganz bis zu benachbarten Bereichen der Wand 23. Das bedeutet, dass zwischen den Enden des Schlitzes 25 und der Wand 23, auf der jeweiligen Seite des Schlitzendes, ein Rohrabstand ohne Schlitz verbleibt.

An den Eingang der Röhre 24 am Abschnitt A1, d.h. an die Öffnung am Beginn des Abschnitts A1 (in Fig. 1 mit dem Bezugszeichen 8 bezeichnet), ist der Druckluftschlauch 26 mit einem ersten Ende 27 über Verbindungsmittel (Schlauchschelle, Verbindungsstück) angeschlossen. Der Druckluftschlauch 26 ist mit seinem anderen Ende 28 an die Druckregelanlage 29 angeschlossen. Die Druckregelanlage 29 kann alternativ ein einfaches Sperrventil sein, sodass eine Druckregelung an anderer Stelle stattfinden kann. Gezeigt ist der Hebel 30, zum Öffnen/Verschließen des Luftdurchflusses. Schematisch und nicht maßstabsgetreu ist ferner eine Druckluftflasche 31 gezeigt, die über den Schlauch 32 an die Regelanlage/das Ventil 29 angeschlossen ist.

An das Ende des dritten Abschnitts A3, jene Öffnung, die in Fig. 1 mit 10 bezeichnet ist, ist eine Schlauchleitung 33 über geeignete Befestigungsmittel (Schlauchschelle) angeschlossen. Durch den Schlauch 33 wird Sand-Luft-Gemisch abtransportiert, das im Abschnitt A2 gebildet wird.

In Fig. 3 ist eine Befüllöffnung 42 auf der Oberseite des Behälters gezeigt, durch welche Sand eingefüllt werden kann. Die Befüllöffnung kann mit einem Deckel verschlossen werden.

Schließlich zeigt Fig. 3 auch einen Untersatz 34 in ausschnittweiser Darstellung, auf dem der Vorratsbehälter 21 befestigt ist. Der Untersatz 34 weist die Säule 35 auf, die über eine Höhenverstellvorrichtung verfügt. Darin ist der Kolben 36 geführt, an dem über ein Zwischenstück 37 die Auflageplatte 38 befestigt ist. Auf die Auflageplatte 38 ist der Vorratsbehälter 21 gestellt und mit Befestigungsriemen 39 befestigt

Eine Besonderheit in Fig. 3 ist die Ausgestaltung des Vorratsbehälters 21 aus Kunststoff. Diese Ausgestaltung erlaubt eine besonders einfache Füllstandskontrolle, da das Niveau der Sandschüttung leicht ersichtlich ist und damit der Füllgrad der Sandfüllungsvorrichtung besonders einfach festzustellen ist.

Alternativ kann der Vorratsbehälter 21 aus anderen Werkstoffen wie z.B. Metall ausgeführt werden, womit sich die Verbindungsmethode "schweißen" oder "kleben" anbietet. In diesem Falle könnte ein eigenes Sichtfenster (in keiner Fig. dargestellt) zur Füllstandskontrolle vorgesehen sein.

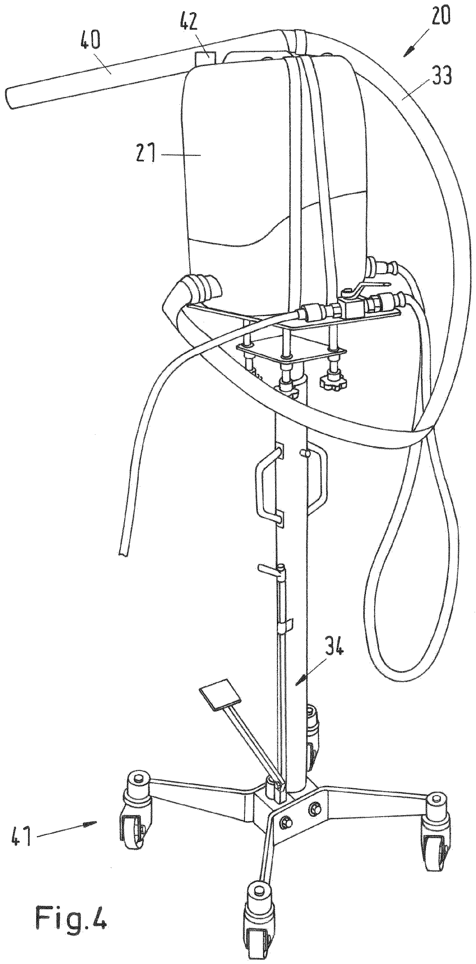

Fig. 4 zeigt den gleichen Aufbau wie Fig. 3. Zusätzlich zu Fig. 3 ist noch eine Ausblaseinheit 40 abgebildet, die am Ende des Schlauches 33 befestigt ist. Weiterhin ist am unteren Ende des Untersatzes 34 der rollbare Fuß 41 gezeigt. Hiermit ist die Sandfüllungsvorrichtung 20 an eine beliebige Stelle des zu befüllenden Schienenfahrzeuges verfahrbar, was einen zusätzlichen Komfort bei der Anwendung der Erfindung darstellt.

### Bezugszeichenliste

- 1: Sandfüllungsvorrichtung
- 2: Vorratsbehälter
- 3: Wand
- 4: Sand
- 5: Röhre
- 6: Öffnung
- 7: Öffnung
- 8: Eingangsöffnung
- 9: schlitzförmige Öffnung
- 10: Ausgangsöffnung
- 11: Scheitel
- 13: Leerraum
- 14: Dichtungselement
- 15: Dichtungselement
- 16: Gewinde
- 17: Gewinde
- 18: Dichtungsfläche
- 19: Dichtungsfläche
- 20: Sandfüllungsvorrichtung
- 21: Vorratsbehälter
- 22: Sand
- 23: Wand
- 24: Röhre
- 25: schlitzförmige Öffnung
- 26: Druckluftschlauch
- 27: Ende
- 28: Ende
- 29: Druckregelanlage
- 30: Hebel
- 31: Druckluftflasche
- 32: Schlauch
- 33: Schlauch
- 34: Untersatz
- 35: Säule
- 36: Kolben
- 37: Zwischenstück
- 38: Auflageplatte
- 39: Befestigungsriemen
- 40: Ausblaseinheit
- 41: Fuß
- 42: Befüllöffnung
- A1: erster Abschnitt
- A2: zweiter Abschnitt
- A3: dritter Abschnitt
- L: Druckluft
- L': Luft
- SL: Sand-Luft-Gemisch
- OS: Oberseite

## Patentansprüche

1. Sandfüllungsvorrichtung (1; 20), aufweisend
- einen Vorratsbehälter (2; 21), der mit Sand (4; 22) oder Streugut befüllbar ist,
- eine Röhre (5; 24), welche eine Wand (3; 23) des Vorratsbehälters zweifach durchstößt und durch den Vorratsbehälter hindurch geführt ist, sodass ein erster Abschnitt (A1) der Röhre außerhalb des Vorratsbehälters (2; 21) angeordnet ist, ein zweiter Abschnitt (A2) der Röhre im Inneren des Vorratsbehälters und ein dritter Abschnitt (A3) der Röhre außerhalb des Vorratsbehälters (2; 21) angeordnet ist,
- eine Druckluftquelle (31), die an den ersten Abschnitt (A1) der Röhre (5; 24) angeschlossen ist, wobei die Druckluftquelle ein Druckluftbehältnis oder ein Kompressor ist,
**dadurch gekennzeichnet, dass** die Röhre (5; 24) auf einer Oberseite (OS) des zweiten Abschnitts (A2) zumindest eine schlitzförmige Öffnung (9; 25) aufweist, durch welche, infolge Schwerkraft in Verbindung mit Druckbeaufschlagung bei Einleiten von Druckluft (L) aus der Druckluftquelle (31) in den ersten Abschnitt (A1) der Röhre (5; 24), sodass die Druckluft von dem ersten Abschnitt (A1) in den zweiten Abschnitt (A2) geströmt wird, der Sand (4; 22) aus dem Vorratsbehälter in das Innere der Röhre einrieselbar ist, wobei die Druckluft (L) in dem zweiten Abschnitt (A2) mit dem eingerieselten Sand vermischbar ist und ein Sand-Luft-Gemisch (SL) bildbar ist, welches durch den dritten Abschnitt (A3) transportabel und ausblasbar

2. Sandfüllungsvorrichtung (1; 20) nach Anspruch 1, wobei sich die zumindest eine schlitzförmige Öffnung (9; 25) in Längsrichtung der Röhre (5; 24) erstreckt.

3. Sandfüllungsvorrichtung (1; 20) nach einem der vorangehenden Ansprüche, wobei sich die zumindest eine schlitzförmige Öffnung (9; 25) im Wesentlichen über den gesamten zweiten Abschnitt (A2) erstreckt.

4. Sandfüllungsvorrichtung nach einem der vorangehenden Ansprüche, aufweisend eine Ausblaseinheit (40), die an den dritten Abschnitt (A3) der Röhre (5; 24) angeschlossen ist.

5. Sandfüllungsvorrichtung nach einem der vorangehenden Ansprüche, wobei die Röhre (5; 24) durch eine Presspassung in die Wand (3; 23) eingepasst ist.

6. Sandfüllungsvorrichtung nach einem der Ansprüche 1-5, wobei an dem ersten Abschnitt (A1) der Röhre (5; 24) eine erste Dichtungsfläche (18) vorgesehen ist, gegen welche die Wand (3; 23) pressbar ist, wenn das Innere des Vorratsbehälters mit Druck beaufschlagt wird, und/oder an dem dritten Abschnitt (A3) der Röhre eine zweite Dichtungsfläche (19) vorgesehen ist, gegen welche die Wand (3; 23) pressbar ist, wenn der Innenraum (13) des Vorratsbehälters mit Druck beaufschlagt wird.

7. Sandfüllungsvorrichtung nach Anspruch 6, wobei die Wand (3; 23) durch Verformung des Vorratsbehälters gegen die erste Dichtungsfläche (18) und/oder zweite Dichtungsfläche (19) pressbar ist.

8. Sandfüllungsvorrichtung nach einem der vorangehenden Ansprüche, wobei der Werkstoff des Vorratsbehälters (2; 21) aus Kunststoff ist.

9. Sandfüllungsvorrichtung nach einem der Ansprüche 1-7, wobei der Werkstoff des Vorratsbehälters (2; 21) aus Metall ist, wobei vorzugsweise die Röhre (5; 24) mittels einer stoffschlüssigen Verbindung, wie Schweißen oder Kleben, mit der Wand (3; 23) verbunden ist.

10. Sandfüllungsvorrichtung nach einem der vorangehenden Ansprüche, aufweisend einen verschiebbaren oder verfahrbaren Untersatz (34), auf welchen der Vorratsbehälter aufgesetzt ist oder am welchem der Vorratsbehälter (2; 21) befestigt ist.

11. Sandfüllungsvorrichtung nach Anspruch 10, wobei der Untersatz (34) höhenverstellbar ist.

12. Sandfüllungsvorrichtung nach einem der vorangehenden Ansprüche, aufweisend eine Befüllöffnung (42) in dem Vorratsbehälter (21), durch die der Vorratsbehälter mit dem Sand befüllbar ist.

13. Sandfüllungsvorrichtung nach Anspruch 12, aufweisend eine Zuleitung zur Einleitung des Sandes in den Vorratsbehälter (21), welche an die Befüllöffnung (42) angeschlossen ist.

14. Verfahren zum Ausbringen von Sand und/oder zum Befüllen eines Behältnisses mit Sand, wobei eine Sandfüllungsvorrichtung nach einem der Ansprüche 1-13 eingesetzt wird und das Verfahren die Schritte aufweist:
- Einrieseln von Sand (4; 22) aus dem Vorratsbehälter (2; 21) durch die schlitzförmige Öffnung (9; 25) in den zweiten Abschnitt (A2) der Röhre (5; 24) infolge Schwerkraft in Verbindung mit Druckbeaufschlagung,
- Einleiten von Druckluft (L) in den ersten Abschnitt (A1) der Röhre (5; 24), sodass die Druckluft (L) von dem ersten Abschnitt (A1) in den zweiten Abschnitt (A2) geströmt wird, sich dort mit dem eingerieselten Sand vermischt und ein Sand-Luft-Gemisch (SL) gebildet wird, welches durch den dritten Abschnitt (A3) transportiert wird,
- Ausblasen des Sand-Luft-Gemisches (SL) aus dem dritten Abschnitt (A3)
- optional Einleiten des Sand-Luft-Gemisches (SL) in ein zu befüllendes Behältnis.

## Claims

1. A sand filling device (1; 20), comprising
- a storage container (2; 21), which is fillable with sand (4; 22) or spreading material,
- a pipe (5; 24), which penetrates a wall (3; 23) of the storage container twice and is guided through the storage container so that a first portion (A1) of the pipe is arranged outside the storage container (2; 21), a second portion (A2) of the pipe is arranged inside the storage container, and a third portion (A3) of the pipe is arranged outside the storage container (2; 21),
- a compressed air source (31), which is connected to the first portion (A1) of the pipe (5; 24), the compressed air source being a compressed air vessel or a compressor,
**characterised in that**
the pipe (5; 24), on an upper side (OS) of the second portion (A2), has at least one slot-like opening (9; 25), through which, as a result of the force of gravity in conjunction with an application of pressure when compressed air (L) from the compressed air source (31) is introduced into the first portion (A1) of the tube (5; 24) so that the compressed air flows from the first portion (A1) into the second portion (A2), the sand (4; 22) is pourable from the storage container into the pipe, the compressed air (L) being miscible in the second portion (A2) with the poured-in sand and a sand-air mixture (SL) being formable, which is transportable and capable of being blown out through the third portion (A3).

2. The sand filling device (1; 20) according to claim 1, wherein the at least one slot-like opening (9; 25) extends in the longitudinal direction of the pipe (5; 24).

3. The sand filling device (1; 20) according to either one of the preceding claims, wherein the at least one slot-like opening (9; 25) extends substantially over the entire second portion (A2).

4. The sand filling device according to any one of the preceding claims, comprising a blow-out unit (40), which is connected to the third portion (A3) of the pipe (5; 24).

5. The sand filling device according to any one of the preceding claims, wherein the pipe (5; 24) is fitted into the wall (3; 23) by a press fit.

6. The sand filling device according to any one of claims 1-5, wherein a first sealing face (18) is provided on the first portion (A1) of the pipe (5; 24), against which sealing face the wall (3; 23) is pressable if pressure is applied to the interior of the storage container, and/or a second sealing face (19) is provided on the third portion (A3) of the pipe, against which the wall (3; 23) is pressable if pressure is applied to the interior (13) of the storage container.

7. The sand filling device according to claim 6, wherein the wall (3; 23) is pressable against the first sealing face (18) and/or second sealing face (19) by deformation of the storage container.

8. The sand filling device according to any one of the preceding claims, wherein the material of the storage container (2; 21) is made of plastic.

9. The sand filling device according to any one of claims 1-7, wherein the material of the storage container (2; 21) is made of metal and the pipe (5; 24) is preferably connected to the wall (3; 23) by means of an integrally bonded connection, such as welding or adhesive bonding.

10. The sand filling device according to any one of the preceding claims, comprising a displaceable or movable stand (34), on which the storage container is placed or to which the storage container (2; 21) is secured.

11. The sand filling device according to claim 10, wherein the stand (34) is height-adjustable.

12. The sand filling device according to any one of the preceding claims, comprising a filling opening (42) in the storage container (21), through which filling opening the sand is fillable into the storage container.

13. The sand filling device according to claim 12, comprising a supply line for introducing the sand into the storage container (21), which supply line is connected to the filling opening (42).

14. A method for dispensing sand and/or for filling a container with sand, wherein a sand filling device according to any one of claims 1-13 is used and the method comprises the steps of:
- pouring sand (4; 22) from the storage container (2; 21) through the slot-like opening (9; 25) into the second portion (A2) of the pipe (5; 24) as a result of the force of gravity in conjunction with an application of pressure;
- introducing compressed air (L) into the first portion (A1) of the pipe (5; 24) so that the compressed air (L) flows from the first portion (A1) into the second portion (A2), mixes there with the poured-in sand, and a sand-air mixture (SL) is formed, which is transported through the third portion (A3);
- blowing out the sand-air mixture (SL) from the third portion (A3);
- optionally introducing the sand-air mixture (SL) into a container that is to be filled.

## Revendications

1. Dispositif de remplissage de sable (1 ; 20), présentant :
- un réservoir (2 ; 21), qui peut être rempli de sable (4 ; 22) ou d'un produit à épandre,
- un tuyau (5 ; 24), lequel transperce à deux endroits une paroi (3 ; 23) du réservoir et est guidé à travers le réservoir de sorte qu'une première section (A1) du tuyau est disposée à l'extérieur du réservoir (2 ; 21), une deuxième section (A2) du tuyau est disposée à l'intérieur du réservoir et une troisième section (A3) du tuyau est disposée à l'extérieur du réservoir (2 ; 21),
- une source d'air comprimé (31), qui est raccordée à la première section (A1) du tuyau (5 ; 24), dans lequel la source d'air comprimé est un récipient d'air comprimé ou un compresseur,
**caractérisé en ce que**
le tuyau (5 ; 24) présente sur un côté supérieur (OS) de la deuxième section (A2) au moins une ouverture (9 ; 25) en forme d'entaille, par laquelle, du fait de la pesanteur et de l'action exercée par une pression lors de l'introduction d'air comprimé (L) provenant de la source d'air comprimé (31) dans la première section (A) du tuyau (5 ; 24), l'air comprimé s'écoule depuis la première section (A1) dans la deuxième section (A2), le sable (4 ; 22) peut être déversé depuis le réservoir à l'intérieur du tuyau, dans lequel l'air comprimé (L) peut être mélangé dans la deuxième section (A2) au sable déversé et un mélange de sable-air (SL) peut être formé, lequel peut être transporté et soufflé à travers la troisième section (A3) .

2. Dispositif de remplissage de sable (1 ; 20) selon la revendication 1, dans lequel au moins une ouverture (9 ; 25) en forme d'entaille s'étend dans le sens longitudinal du tuyau (5 ; 24).

3. Dispositif de remplissage de sable (1 ; 20) selon l'une quelconque des revendications précédentes, dans lequel l'au moins une ouverture (9 ; 25) en forme d'entaille s'étend sensiblement sur la totalité de la deuxième section (A2) .

4. Dispositif de remplissage de sable selon l'une quelconque des revendications précédentes, présentant une unité de soufflage (40), qui est raccordée à la troisième section (A3) du tuyau (5 ; 24).

5. Dispositif de remplissage de sable selon l'une quelconque des revendications précédentes, dans lequel le tuyau (5 ; 24) est ajusté dans la paroi (3 ; 23) avec un ajustement serré.

6. Dispositif de remplissage de sable selon l'une quelconque des revendications 1 à 5, dans lequel est prévue au niveau de la première section (A1) du tuyau (5 ; 24), une première surface d'étanchéité (18), contre laquelle la paroi (3 ; 23) peut être pressée quand l'intérieur du réservoir est soumis à l'action d'une pression et/ou est prévue au niveau de la troisième section (A3) du tuyau une deuxième surface d'étanchéité (19), contre laquelle la paroi (3 ; 23) peut être pressée quand l'espace intérieur (13) du réservoir est soumis à l'action d'une pression.

7. Dispositif de remplissage de sable selon la revendication 6, dans lequel la paroi (3 ; 23) peut être pressée par déformation du réservoir contre la première surface d'étanchéité (18) et/ou la deuxième surface d'étanchéité (19).

8. Dispositif de remplissage de sable selon l'une quelconque des revendications précédentes, dans lequel le matériau du réservoir (2 ; 21) est en matière plastique.

9. Dispositif de remplissage de sable selon l'une quelconque des revendications 1 à 7, dans lequel le matériau du réservoir (2 ; 21) est en métal, dans lequel de préférence le tuyau (5 ; 24) est relié à la paroi (3 ; 23) au moyen d'une liaison par liaison de matière, telle qu'un soudage ou un collage.

10. Dispositif de remplissage de sable selon l'une quelconque des revendications précédentes, présentant un support (34) pouvant être coulissé ou déplacé, sur lequel le réservoir est placé ou au niveau duquel le réservoir (2 ; 21) est fixé.

11. Dispositif de remplissage de sable selon la revendication 10, dans lequel le support (34) peut être réglé en hauteur.

12. Dispositif de remplissage de sable selon l'une quelconque des revendications précédentes, présentant une ouverture de remplissage (42) dans le réservoir (21), par laquelle le réservoir peut être rempli de sable.

13. Dispositif de remplissage de sable selon la revendication 12, présentant un conduit d'arrivée pour introduire le sable dans le réservoir (21), lequel est raccordé à l'ouverture de remplissage (42).

14. Procédé pour distribuer du sable et/ou pour remplir un récipient avec du sable, dans lequel un dispositif de remplissage de sable selon l'une quelconque des revendications 1 à 13 est utilisé et le procédé présente les étapes :
- de déversement de sable (4 ; 22) provenant du réservoir (2 ; 21) par l'ouverture (9 ; 25) en forme d'entaille dans la deuxième section (A2) du tuyau (5 ; 24) du fait de la pesanteur et de l'action d'une pression,
- d'introduction d'air comprimé (L) dans la première section (A1) du tuyau (5 ; 24) de sorte que l'air comprimé (L) s'écoule depuis la première section (A1) dans la deuxième section (A2), s'y mélange au sable déversé et un mélange de sable-air (SL) est formé, lequel est transporté à travers la troisième section (A3),
- de soufflage du mélange de sable-air (SL) provenant de la troisième section (A3),
- d'introduction en option du mélange de sable-air (SL) dans un récipient à remplir.
